# EUROPEAN PATENT APPLICATION

(11) **EP 3 623 146 A1**
(43) Date of publication of application: **18.03.2020**
(21) Application number: 18194168.3
(22) Date of filing: 13.09.2018
(51) Int. Cl.: B32B 5/02, B32B 5/16, B32B 5/26, B32B 7/12

(54) **WASHING MARK WITH RF IDENTIFICATION**

(71) Applicant: BGT Materials Limited, Manchester M13 9PL (GB)
(72) Inventor: Chang, Kuo-Hsin, Chiayi County 622 (TW); Lai, Chung-Ping, Hsinchu County 302 (TW)
(74) Representative: Cabinet Chaillot

(57) **Abstract**

The washing mark includes a first textile substrate, a second textile substrate and a radio frequency identification (RFID) tag. The RFID tag is sandwiched between the first textile substrate and the second textile substrate and includes an antenna printed on a first surface of the first textile substrate and an RFID chip electrically connected to the antenna. The antenna is a porous structure formed by graphene-based conductive ink without an adhesive with a compression ratio of 50%∼90%. The second textile substrate is adhered onto the RFID tag by an adhesive.

## Description

### Technical Field

The invention relates to washing marks, particularly to a washing mark with radio frequency identification.

### Related Art

Wash marks, also known as care labels or care tags, are washable labels attached to clothing or bags to indicate fabric composition and how a particular item should best be cleaned. Conventional washing tags are made by textile substrate with printed texts and/or symbols.

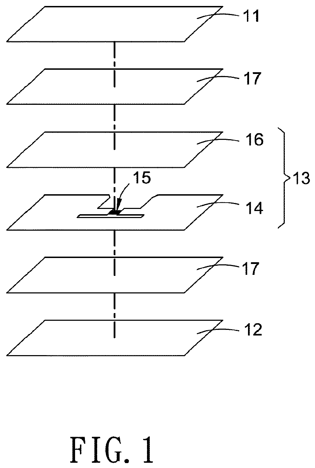

A new washing mark with radio frequency identification (RFID) tag has been developed. FIG. 1 shows such a washing mark with an RFID tag. This washing mark includes a first textile substrate 11, a second textile substrate 12 and an RFID tag 13. The RFID tag 13 primarily includes an antenna 14 and an RFID chip 15 electrically connected to the antenna 14. The antenna 14 is formed by a metal etching process, which includes the following steps of:
a) bonding a metal foil to a PET plastic film;
b) performing photoresist printing on the metal foil;
c) etching parts of the metal foil, which are not covered by the photoresist;
d) removing the photoresist and cleaning an antenna 14 formed by the remained metal foil; and
e) performing quality inspection to the antenna 14.

The etching approach will pollute the environment and will have to be eliminated.

The RFID tag 13 made by the above process has a PET plastic film 16, which needs an adhesive 17 to be adhered between the first and second textile substrates 11, 12. There is another approach for forming an antenna of RFID tag, which prints metal conductive ink (e.g. silver paste) onto a PET plastic film. This can solve the pollution problem of the metal etching industry, but such an antenna formed by silver paste possesses less flexibility and extensibility. Also, metal particles contained in silver paste is easy to separate or be broken. This will cause damage to the antenna.

US patent No. 9,888,578 provides a printed graphene-based laminate for wireless wearable communications, which can be made at a low temperature to be compatible with thermo-flexible materials such as paper and fabric. This shows that a graphene-based laminate made by graphene-based conductive ink printing possesses high conductivity, high flexible, low weight and low cost. And it is an ideal solution for wearable devices.

### Summary of the Invention

An object of the invention is to provide a washing mark with RFID, which possesses high flexible and low cost.

The washing mark of the invention includes a first textile substrate, a second textile substrate and a radio frequency identification (RFID) tag. The RFID tag is sandwiched between the first textile substrate and the second textile substrate and includes an antenna printed on a first surface of the first textile substrate and an RFID chip electrically connected to the antenna. The antenna is a porous structure formed by graphene-based conductive ink without an adhesive with a compression ratio of 50%∼90%. The second textile substrate is adhered onto the RFID tag by an adhesive.

The invention also provide a manufacturing method of the washing mark. The method includes the following steps of:
S1: directly printing the graphene-based conductive ink without an adhesive onto the first surface of the first textile substrate;
S2: drying the graphene-based conductive ink without an adhesive in an oven at 60°C∼200°C to form a porous structure;
S3: rolling the porous structure with a compression ratio of 50%∼90% to form the antenna;
S4: attaching the RFID chip onto the RFID tag and electrically connecting the RFID chip to the antenna to form the RFID tag;
S5: coating the RFID tag with an adhesive; and
S6: bonding the second textile substrate onto the adhesive to make the RFID tag sandwiched between the first and second textile substrates.

The printing of step S1 includes one of screen printing, inkjet printing and spray printing.

Preferably, the graphene-based conductive ink without an adhesive is composed of graphene, filler particles, dispersant and solvent.

Preferably, the filler particles include one of carbon material, metal particles and conductive oxide powder.

Preferably, the carbon material includes one of graphene, graphite, carbon black, carbon nanotube and fullerene.

Preferably, the metal particles include one of platinum, gold, palladium, silver, copper, nickel and zinc and core-shell particles and alloys thereof.

Preferably, the conductive oxide powder includes one of palladium oxide and ruthenium oxide.

Preferably, the porous structure is formed by a mixture of macro-porous architecture. The pore diameter of the mixture of macro-porous architecture is great than 50 nm. The mixture of macro-porous architecture is composed of naturally-stacked graphene.

Preferably, the porous structure includes porous structures composed of other carbon materials. The other carbon materials include one of graphite nanosheet, carbon nanotube, carbon nanowire, carbon nanorod and carbon nanofiber.

### Brief Description of the Drawings

FIG. 1 is an exploded view of an existing washing mark with an RFID tag;
FIG. 2 is an exploded view of an embodiment of the washing mark of the invention;
FIG. 3-1 is a partially cross-sectional view of the washing mark of the invention, which shows a porous structure of the dried graphene-based conductive ink without an adhesive;
FIG. 3-2 is a partially cross-sectional view of the washing mark of the invention, which shows a compressed porous structure of the dried graphene-based conductive ink without an adhesive;
FIG. 4 is a flowchart of the manufacturing method of the washing mark of the invention;
FIG. 5 is a partially cross-sectional view of another embodiment of the washing mark of the invention; and
FIG. 6 is a graph of bending test of the invention.

### Detailed Description of the Invention

The positional relationship in the following description, including top (upper), bottom (lower), left and right, is based on the directions in the drawings if no special indication.

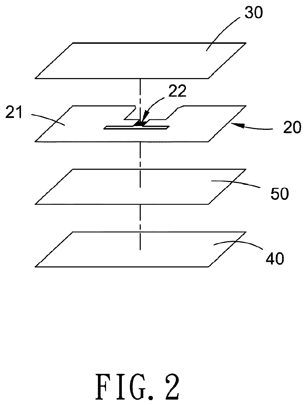

Please refer to FIG. 2, which is an exploded view of an embodiment of the washing mark of the invention. As shown, the washing mark of the invention includes a first textile substrate 30, a second textile substrate 40 and a radio frequency identification (RFID) tag 20. The RFID tag 20 is sandwiched between the first textile substrate 30 and the second textile substrate 40. Basically, the first textile substrate 30 and the second textile substrate 40 are fabric.

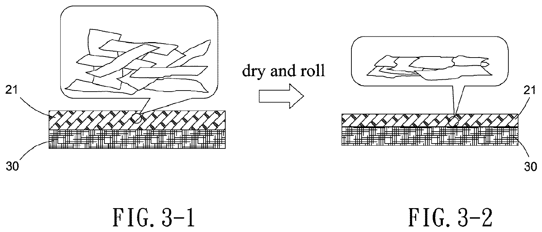

A preferred embodiment of the RFID tag 20 includes an antenna 21 directly printed on a first surface of the first textile substrate 30 and an RFID chip 22 electrically connected to the antenna 21. The antenna 21 is printed on the first surface with graphene-based conductive ink without an adhesive, then dry and roll the graphene-based conductive ink without an adhesive with a compression ratio of 50%∼90% to form the antenna 21 with a porous structure as shown in FIGS. 3-1 and 3-2, and finally bond the second textile substrate 40 onto the RFID tag 20 with an adhesive to make the RFID tag 20 sandwiched between the first and second textile substrates 30, 40. This composes the washing mark of the invention.

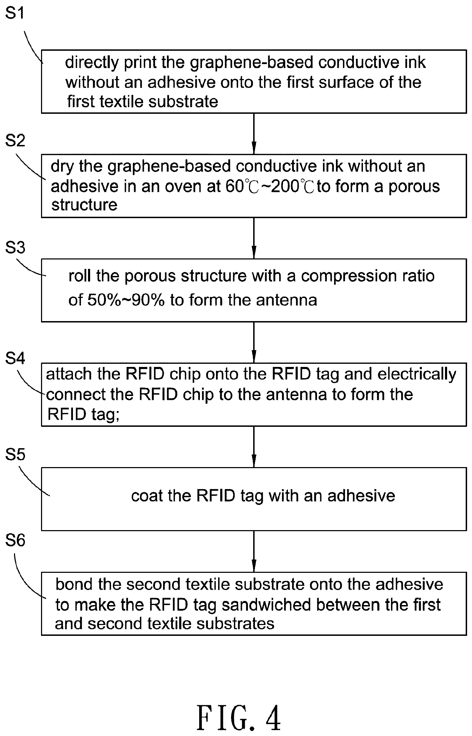

Please refer to FIG. 4, which is a flowchart of the manufacturing method of the washing mark of the invention. The method includes the following steps of:
S1: directly printing the graphene-based conductive ink without an adhesive onto the first surface of the first textile substrate 30;
S2: drying the graphene-based conductive ink without an adhesive in an oven at 60°C∼200°C to form a porous structure as shown in FIG. 3-1;
S3: rolling the porous structure with a compression ratio of 50%∼90% to form the antenna 21 as shown in FIG 3-2;
S4: attaching the RFID chip 22 onto the RFID tag 20 and electrically connecting the RFID chip 22 to the antenna 21 to form the RFID tag 20;
S5: coating the RFID tag 20 with an adhesive 50; and
S6: bonding the second textile substrate 40 onto the adhesive 50 to make the RFID tag 20 sandwiched between the first and second textile substrates 30, 40.

The printing of step S1 includes one of screen printing, inkjet printing and spray printing. In a preferred embodiment, the graphene-based conductive ink without an adhesive is composed of graphene, filler particles, dispersant and solvent. The graphene-based conductive ink without an adhesive is printed on the first surface of the first textile substrate 30, and then dry and roll the graphene-based conductive ink without an adhesive with a compression ratio of 50%∼90% to form the antenna 21 with a porous structure. The antenna is a dense graphene-based compressed layer as shown in FIG. 3-2. The rolling process can enhance the Van der Waals force between graphene sheets contained in the graphene-based conductive ink without an adhesive. Also, conductivity of the graphene-based conductive ink without an adhesive can be improved because of absence of insulative polymer adhesive.

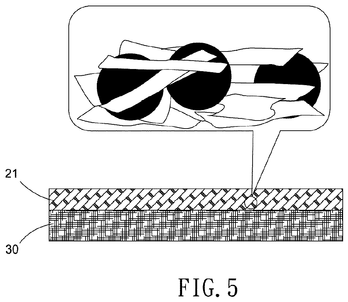

In a preferred embodiment, the porous structure formed by the dried graphene-based conductive ink without an adhesive may serve as a conductive cage for capturing the filler particles as shown in FIG. 5. The filler particles include one of carbon material, metal particles and conductive oxide powder.

In a preferred embodiment, the carbon material includes one of graphene, graphite, carbon black, carbon nanotube and fullerene. The metal particles include one of platinum, gold, palladium, silver, copper, nickel and zinc and core-shell particles and alloys thereof. The conductive oxide powder includes one of palladium oxide and ruthenium oxide.

In a preferred embodiment, the porous structure formed by the dried graphene-based conductive ink without an adhesive is formed by a mixture of macro-porous architecture. The pore diameter of the mixture of macro-porous architecture is great than 50 nm. The mixture of macro-porous architecture is composed of naturally-stacked graphene. The porous structure includes porous structures composed of other carbon materials. The other carbon materials include one of graphite nanosheet, carbon nanotube, carbon nanowire, carbon nanorod and carbon nanofiber.

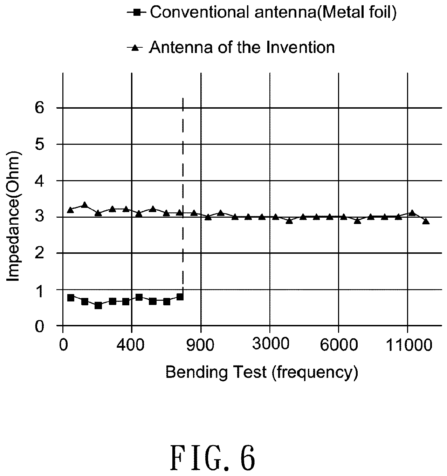

Finally please refer to FIG. 6, which is a graph of bending test of the invention. It can found out that in comparison with a conventional antenna made by metal foil (such as the Al foil shown in FIG. 6), the antenna 21 made by the dried and rolled graphene-based conductive ink without an adhesive directly printed on the first surface of the first textile substrate 30 of the invention possesses great flexibility and extensibility. And its manufacture is simple and cheap and is suitable for mass-production.

## Claims

1. A washing mark comprising:
a first textile substrate;
a second textile substrate; and
a radio frequency identification (RFID) tag, sandwiched between the first textile substrate and the second textile substrate, and comprising an antenna printed on a first surface of the first textile substrate and an RFID chip electrically connected to the antenna;
wherein the antenna is a porous structure formed by graphene-based conductive ink without an adhesive with a compression ratio of 50%∼90%, and the second textile substrate is adhered onto the RFID tag by an adhesive.

2. The washing mark of claim 1, wherein the graphene-based conductive ink without an adhesive is composed of graphene, filler particles, dispersant and solvent.

3. The washing mark of claim 2, wherein the filler particles include one of carbon material, metal particles and conductive oxide powder.

4. The washing mark of claim 3, wherein the carbon material includes one of graphene, graphite, carbon black, carbon nanotube and fullerene.

5. The washing mark of claim 3, wherein the metal particles include one of platinum, gold, palladium, silver, copper, nickel and zinc and core-shell particles and alloys thereof.

6. The washing mark of claim 3, wherein the conductive oxide powder includes one of palladium oxide and ruthenium oxide.

7. The washing mark of claim 1, wherein the porous structure is formed by a mixture of macro-porous architecture, the pore diameter of the mixture of macro-porous architecture is great than 50 nm, and the mixture of macro-porous architecture is composed of naturally-stacked graphene.

8. The washing mark of claim 7, wherein the porous structure includes porous structures composed of other carbon materials, and the other carbon materials include one of graphite nanosheet, carbon nanotube, carbon nanowire, carbon nanorod and carbon nanofiber.
